Europäisches Patentamt

(19) European Patent Office

Office européen des brevets

(11) **EP 0 810 115 A2**

(12) **EUROPEAN PATENT APPLICATION**

(43) Date of publication:
03.12.1997 Bulletin 1997/49

(51) Int. Cl.$^6$: **B60K 41/28**

(21) Application number: 97108481.9

(22) Date of filing: 26.05.1997

(84) Designated Contracting States:
DE FR GB

(30) Priority: 27.05.1996 JP 154890/96

(71) Applicant:
TOYOTA JIDOSHA KABUSHIKI KAISHA
Aichi-ken 471 (JP)

(72) Inventors:
• Sugihara, Koichi
Toyota-shi, Aichi-ken 471 (JP)

• Maeda, Tomoyuki
Toyota-shi, Aichi-ken 471 (JP)
• Taketsuna, Yasuji
Toyota-shi, Aichi-ken 471 (JP)

(74) Representative:
KUHNEN, WACKER & PARTNER
Alois-Steinecker-Strasse 22
85354 Freising (DE)

(54) **Control system for automatic transmission**

(57) A control system for an automatic transmission comprises a constant mesh type gear speed change mechanism for transmitting the output torque of an engine, and a plurality of frictional engagement elements adapted to be separately applied/released for switching torque transmission passages of the gear speed change mechanism to set a predetermined gear stage. The control system is provided with a torque control function to control the drive force of a vehicle by slipping the frictional engagement elements other than those setting a gear stage while the vehicle is running in the state with the predetermined gear stage being set by applying predetermined ones of the frictional engagement elements.

**FIG.5**

EP 0 810 115 A2

Printed by Rank Xerox (UK) Business Services
2.14.23/3.4

**Description**

BACKGROUND OF THE INVENTION

Field of the Invention

The present invention relates to a control system for an automatic transmission for setting a gear stage by switching the torque transmission passages of a constant mesh type gear speed change mechanism.

Related Art

As well known in the art, a vehicular automatic transmission is provided with a constant mesh type gear speed change mechanism for transmitting the output torque of a prime mover and a plurality of frictional engagement elements. By applying/releasing these frictional engagement elements, moreover, the torque transmission passages of the gear speed change mechanism are switched to set a gear stage so that a drive force matching the running state of the vehicle may be generated.

When the vehicle actually runs on a road, on the other hand, the road situation differs depending upon weathers, seasons or district characteristics. Merely by changing the gear stages to control the drive force, therefore, a stable drivability is difficult to retain. In recent years, therefore, a vehicle capable of achieving a drive force according to the road situation has been developed by controlling a system other than the automatic transmission. The specific system for controlling the drive force can be exemplified by an auto-drive system or an anti-lock brake system.

The auto-drive system is enabled to keep the vehicle speed constant irrespective of a change in the road situation by adjusting the degree of opening of the throttle valve automatically without depressing the accelerator pedal. This auto-drive system is composed of: a auto-drive control switch for setting/releasing/restoring the vehicle speed; a computer for detecting a signal to be inputted from the auto-drive control switch or the running state of the vehicle; and an actuator to be controlled by the computer for adjusting the degree of opening of the throttle valve of an engine or a prime mover.

On the other hand, the anti-lock system is one for preventing the wheels of a vehicle from skidding when a brake unit is activated while the vehicle is running on a snow-covered road or a frozen road. This anti-lock brake system is composed of: a master cylinder for regulating the oil pressures to be fed to wheel cylinders at the wheel sides in accordance with the depression of the brake pedal; a wheel speed sensor attached to each wheel; a computer for deciding the road surface situation on the basis of signals detected by the wheel speed sensors; and an actuator disposed in the oil passages between the master cylinder and the wheel cylinders for varying the oil pressures to be fed from the master cylinder to the wheel cylinders on the basis of the control of the computer.

In order to provide the aforementioned auto-drive system or anti-lock brake system, however, it is necessary to add an actuator for adjusting the opening of the throttle valve automatically and actuators for adjusting the oil pressures to be fed to the wheel cylinders. This addition may increase the numbers of components and manufacture steps of the vehicle to raise the manufacture cost and may increase the vehicle weight to lower the mileage.

SUMMARY OF THE INVENTION

A main object of the present invention is to provide a control system for an automatic transmission, which is enabled to switch the gear stages of the automatic transmission and to control the drive force of the vehicle by utilizing the components existing in the automatic transmission.

According to the control system for an automatic transmission, as having a construction of a first feature of the present invention, the output torque of a prime mover is outputted through frictional engagement elements setting a gear stage to an automatic transmission so that the vehicle is run. If, in this state, other frictional engagement elements taking no participation for setting the gear stage of the automatic transmission are slipped, the torque is circulated according to the slip torque to generate a braking force. As a result, the load upon a brake unit for stopping the rotations of wheels can be lightened, and the run/stop of the vehicle can be retained even if the brake unit fails.

Moreover, since the output torque of the automatic transmission can be controlled by slipping the frictional engagement elements other than those setting the gear stage, that is, the existing components so that the manufacture cost can be suppressed with increasing neither the numbers of components and manufacture steps of the vehicle and so that the vehicle weight can be unchanged to keep the mileage.

According to the control system for an automatic transmission, as having a construction of a second feature of the present invention, controls are made to slip an automatic clutch and the clutches other than those setting the gear stage. This makes it possible to control the output torque of the automatic transmission at two stages. As a result, the driven force of the vehicle can be finely controlled to improve the compatibility with the road situation and accordingly the drivability.

According to the control system for an automatic transmission, as having a construction of a third feature of the present invention, the oil pressure to act upon the frictional engagement elements is controlled by an oil pressure control unit. As a result, the output torque of the automatic transmission can be highly accurately controlled.

According to the control system for an automatic transmission, as having a construction of a fourth feature of the present invention, a ratio between a braking torque to be borne by the frictional engagement elements and a braking torque to be borne by the brake unit is set on the basis of a demanded braking force of the vehicle. As a result, the frictional heat to be generated in the brake unit can be suppressed to improve the durability of the brake unit.

According to the control system for an automatic transmission, as having a construction of a fifth feature of the present invention, the demanded braking force is detected on the basis of either the stroke of depression of the brake pedal or the number of depressions of the brake pedal. As a result, a braking force, as matching the intention of the driver, can be generated to improve the drivability better.

According to the control system for an automatic transmission, as having a construction of a sixth feature of the present invention, the heat generation of the brake unit is further suppressed to prevent the fading phenomenon.

According to the control system for an automatic transmission, as having a construction of a seventh feature of the present invention, the drive force of the vehicle is controlled by slipping the frictional engagement elements. As a result, the function to keep the vehicle speed at the auto-drive control time is improved to improve the drivability.

According to the control system for an automatic transmission, as having a construction of an eighth feature of the present invention, the wheels are prevented from skidding by the anti-lock brake system control while the brake unit is activated. When the torque is transmitted from the wheels to the automatic transmission by the inertial energy of the wheels, on the other hand, it is absorbed by the slipping frictional engagement elements so that the function to control the drive force of the vehicle is improved to improve the drivability.

According to the control system for an automatic transmission, as having a construction of a ninth feature of the present invention, the slip control of the frictional engagement elements is added to a traction control for controlling the drive force of the vehicle. As a result, the output torque of the automatic transmission is controlled to improve the function to control the drive force of the vehicle thereby to improve the drivability.

The above and further objects and novel features of the present invention will more fully appear from the following detailed description when the same is read with reference to the accompanying drawings. It is to be expressly understood, however, that the drawings are for the purpose of illustration only and are not intended as a definition of the limits of the invention.

BRIEF DESCRIPTION OF THE DRAWINGS

Fig. 1 is a schematic section showing a construction of an automatic transmission to be used in the present invention and its vicinity;

Fig. 2 is a skeleton diagram showing the automatic transmission and its vicinity of Fig. 1;

Fig. 3 is a block diagram showing a main system construction of a control system for the automatic transmission in the present invention;

Fig. 4 is a hydraulic circuit diagram of an oil pressure control unit to be used in the present invention;

Fig. 5 is a flow chart showing one example of a control routine of the present invention;

Fig. 6 is a time chart illustrating relations among a target brake torque of the whole vehicle, the brake torque to be borne by the slip control of the automatic transmission, and the brake torque to be borne by a brake unit in the control routine of Fig. 5;

Fig. 7 is a flow chart showing one example of the control routine of the present invention; and

Fig. 8 is a flow chart showing one example of the control routine of the present invention.

DETAILED DESCRIPTION OF THE PREFERRED EMBODIMENT

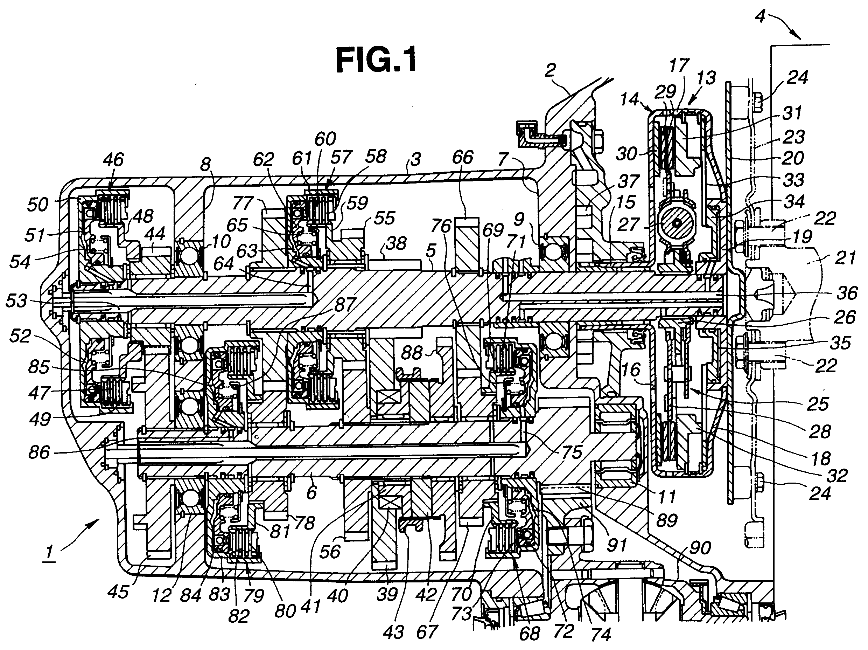

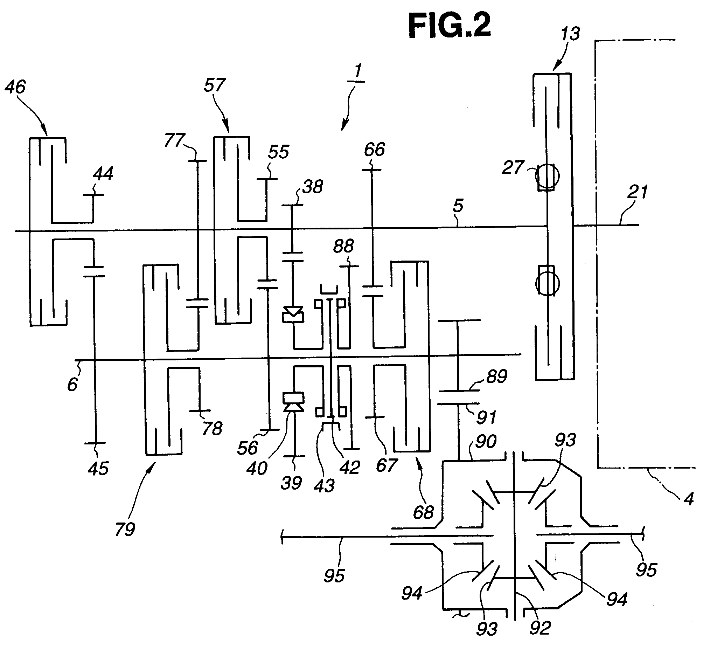

The present invention will be described in connection with its embodiment with reference to the accompanying drawings. Fig. 1 is a section showing an example of the construction of an automatic transmission 1 to which is applied the present invention, and Fig. 2 is a skeleton diagram showing a schematic construction of the automatic transmission 1. This automatic transmission 1 is constructed of a clutch housing 2 and a gear unit case 3, as formed integrally with each other, and the open end of the clutch housing 2 is fixed to an engine 4 acting as a prime mover.

This engine 4 is exemplified by an internal combustion engine such as a gasoline engine, a Diesel engine, an LPG engine, a gas turbine engine or a jet engine. In addition to this internal combustion engine, an electric motor or a fuel cell system can be used as the prime mover. In the gear unit case 3, an input shaft 5 and a counter shaft 6 are arranged in parallel with each other, and one end side of the input shaft 5 is inserted into the clutch housing 2.

A partition 7 is interposed between the clutch housing 2 and the gear unit case 3, and a partition 8 is also disposed in the clutch housing 2. The input shaft 5 is rotatably retained by bearings 9 and 10 which are separately mounted in the opposed positions of the partitions 7 and 8. The counter shaft 6 is also rotatably retained by bearings 11 and 12 which are separately retained in the opposed positions of the partitions 7 and 8.

On one end side of the input shaft 5, i.e., on one end inserted into the clutch housing 2, there is mounted an inputting automatic clutch 13. This automatic clutch 13 will be described in detail.

A hollow clutch casing 14, as made rotatable relative to the input shaft 5, is composed of a sleeve 15 mounted on the outer circumference of the input shaft 5, a flange 16 extending radially outward from one end of the sleeve 15, a cylindrical portion 17 protruded from the outer circumferential end of the flange 16 toward the engine 4, and an annular cover 18 attached to the opening of the cylindrical portion 17 at the side of the engine 4.

The inner circumference of the annular cover 18 is fixed on the outer circumference of an annular cylinder 19 which is formed to have a generally C-shaped section, and the input shaft 5 is rotatably fitted in the inner circumference of the cylinder 19. A disc-shaped plate 20 is fixed on the side face of the cylinder 19 at the side of the engine 4.

On the end portion, as located at the side of the engine 4 or at the side of the automatic transmission 1, of a crankshaft 21, there is fixed a drive plate 23 by means of screws 22. This drive plate 23 is connected to the plate 20 by means of screws 24. In the clutch casing 14, there are disposed clutch discs 25.

These clutch discs 25 are equipped with a hub 26 splined to the outer circumference of the input shaft 5, a damper mechanism 27 mounted on the outer circumference of the hub 26, an annular plate 28 mounted on the outer circumference of the hub 26, and clutch facings 29 fixed circumferentially on the two side faces of the plate 28. On the inner face of the flange 16 of the clutch casing 14, there is circumferentially mounted a pressure receiving plate 30, which is opposed to the clutch facings 29.

In the clutch casing 14 between the cover 18 and the clutch facings 29, there is interposed an annular pusher plate 31. This pusher plate 31 is made movable in the axial direction of the input shaft 5.

The pusher plate 31 is arranged concentrically with the clutch casing 14 and has a projection 32 formed on its side face at the side of the cover 18. Between the pusher plate 31 and the cover 18, there is sandwiched an annular diaphragm spring 33. This diaphragm spring 33 is fixed at its outer circumference in the clutch casing 14 and is given a smaller internal diameter than the external diameter of the cylinder 19.

The diaphragm spring 33 is made of an annular leaf spring member in which the external center portion and the internal center portion are displaced in the axial direction of the input shaft 5, like that which is used in a dry type clutch in a manual transmission of the prior art.

The projection 32 of the pusher plate 31 is in abutment against the diaphragm spring 33, the inner circumference of which is in abutment against a piston 34. This piston 34 is so fitted in the cylinder 19 as to move in the axial direction of the input shaft 5. An oil pressure chamber 35 is formed between the piston 34 and the cylinder 19.

By feeding the oil pressure to the oil pressure chamber 35 via an oil passage 36 formed in the input shaft 5, the piston 34 is moved leftward of Fig. 1 to push the inner circumferential portion of the diaphragm spring 33 in the axial direction of the input shaft 5. By controlling the oil pressure to be fed to the oil pressure chamber 35, therefore, the pusher plate 31 is brought into and out of engagement with the clutch facings 29 and the pressure receiving plate 30 so that the apply pressure, i.e., the torque capacity can be controlled.

On the side face of the partition 7 at the side of the automatic clutch 13, there is mounted an oil pressure pump 37. The sleeve 15 of the clutch casing 14 is inserted along the outer circumference of the input shaft 5 into the oil pressure pump 37 such that its end portion is connected to the movable portion of the oil pressure pump 37. As a result, the oil pressure pump 37 is driven by the rotation of the clutch casing 14.

Between the input shaft 5 and the counter shaft 6, there is interposed a gear speed change mechanism, i.e., five pairs of gears meshing with each other. These gear pairs will be sequentially described in the following. A drive gear 38 for a first speed is formed on the outer circumference of an axially intermediate portion of the input shaft 5. A driven gear 39 for the first speed, as meshing with the first speed drive gear 38, is rotatably mounted on the outer circumference of the counter shaft 6.

On the outer circumference of the counter shaft 6, there is rotatably mounted a one-way clutch 40, the outer race of which is formed of a portion of the inner circumference of the first speed driven gear 39. The one-way clutch 40 is applied in a direction to transmit the torque from the first speed driven gear 39 to an inner race 41.

To the counter shaft 6, there is splined a clutch hub 42 which is adjacent to the one-way clutch 40. The inner race 41 of the one-way clutch 40 is partially extended radially outward to the external diameter of the clutch hub 42. The outer circumferences of the clutch hub 42 and the inner race 41 are splined (although not shown) to fit a hub sleeve 43 therein movably in the axial direction of the counter shaft 6. In other words, the hub sleeve 43 is splined to the clutch hub 42 and the inner race 41 to transmit the torque between the clutch hub 42 and the inner race 41.

On the end portion, as located at the opposite side of the automatic clutch 13, of the input shaft 5, there is rotatably fitted a drive gear 44 for a second speed. A driven gear 45 for a second speed, as meshing with the second speed drive gear 44, is splined to the outer circumference of the counter shaft 6. A clutch 46 for the second speed acting as a frictional engagement element is disposed adjacent to the second speed drive gear 44.

The second speed clutch 46 is a wet type multi-disc clutch, in which an annular clutch hub 48 having a plurality of annular clutch discs 47 splined in its outer circumference is connected to the second speed drive gear 44. Moreover, a clutch drum 50 having a plurality of annular clutch plates 49 splined in the inner circumference of its cylindrical portion

is splined to the end portion of the input shaft 5. A piston 51 is so fitted in the clutch drum 50 as to move in the axial direction of the input shaft 5.

When the oil pressure is fed from an oil passage 53 formed in the input shaft 5 to an oil pressure chamber 52 at the back side of the piston 51, this piston 51 is moved rightward of Fig. 1 to provide the engagement between the clutch discs 47 and the clutch plates 49 so that the torque is transmitted by the resultant frictional force. When the oil pressure chamber 52 is relieved from the oil pressure, the piston 51 is pushed leftward of Fig. 1 by a return spring 54 to disengage the clutch discs 47 and the clutch plates 49. By regulating the oil pressure to be fed to the oil pressure chamber 52, therefore, the engaging force between the clutch discs 47 and the clutch plates 49, that is, the torque capacity of the second speed clutch 46 is controlled.

On the input shaft 5, there is rotatably retained a drive gear 55 for a third speed, which is located adjacent to the first speed drive gear 38. A driven gear 56 for the third speed, as meshing with the third speed drive gear 55, is splined to the outer circumference of the counter shaft 6. As a frictional engagement element for connecting the third speed drive gear 55 selectively to the input shaft 5, there is provided a clutch 57 for the third speed, as located adjacent to the third speed drive gear 55.

This third speed clutch 57 is a wet type multi- disc clutch, in which an annular clutch hub 59 having a plurality of annular clutch discs 58 splined to its outer circumference is formed integrally with the third speed drive gear 55. A clutch drum 61, as having a plurality of annular clutch plates 60 splined to the inner circumference of its cylindrical portion, is splined to the input shaft 5.

A piston 62 is so fitted in the clutch drum 61 as to move in the axial direction of the input shaft 5. When the oil pressure is fed to an oil pressure chamber 63 at the back side of the piston from an oil passage 64 formed in the input shaft 5, the piston 62 is moved rightward of Fig. 1 to provide the engagement between the clutch discs 58 and the clutch plates 60 so that the torque is transmitted by the resultant frictional force.

When the oil pressure chamber 62 is relieved from the oil pressure, the piston 62 is pushed leftward of Fig. 1 by a return spring 65 to disengage the clutch discs 58 and the clutch plates 60. By regulating the oil pressure to be fed to the oil pressure chamber 62, therefore, the engaging force between the clutch discs 58 and the clutch plates 60, that is, the torque capacity of the third speed clutch 57 is controlled.

To the input shaft 5 in the vicinity of the partition 7, there is splined a drive gear 66 for a fourth speed. A driven gear 67, as meshing with the fourth speed drive gear 66, is rotatably retained on the counter shaft 6. As the frictional engagement element for connecting the fourth speed driven gear 67 selectively to the counter shaft 6, there is arranged a clutch 68 for the fourth speed adjacent to the fourth speed driven gear 67.

This fourth speed clutch 68 is a wet type multi- disc clutch in which an annular clutch hub 70 having a plurality of annular clutch discs 69 splined to its outer circumference is splined to the fourth speed driven gear 67. A clutch drum 72, as having a plurality of annular clutch plates 71 splined to the inner circumference of its cylindrical portion, is splined to the input shaft 5.

A piston 73 is so arranged in the clutch drum 72 as to move in the axial direction of the input shaft 5. When the oil pressure is fed to an oil pressure chamber 74 at the back side of the piston 73 from an oil passage 75 formed in the counter shaft 6, the piston 73 is moved leftward of Fig. 1 to provide the communication between the clutch discs 69 and the clutch plates 71 so that the torque is transmitted by the resultant frictional force.

When the oil pressure chamber 74 is relieved from the oil pressure, the piston 73 is pushed rightward of Fig. 1 by a return spring 76 to disengage the clutch discs 69 and the clutch plates 71. By regulating the oil pressure to be fed to the oil pressure chamber 74, therefore, the engaging force between the clutch discs 69 and the clutch plates 71, that is, the torque capacity of the fourth speed clutch 68 is controlled.

To the input shaft 5 between the third speed clutch 57 and the partition 8, there is splined a drive gear 77 for a fifth speed. A driven gear 78, as meshing with the fifth speed drive gear 77, is rotatably retained on the counter shaft 6. A clutch 79 for the fifth speed acting as the frictional engagement element for connecting the fifth speed driven gear 78 selectively to the counter shaft 6 is interposed between the partition 8 and the fifth speed driven gear 78.

This fifth speed clutch 79 is a wet type multi- disc clutch in which an annular clutch hub 81 having a plurality of annular clutch discs 80 splined to its outer circumference is splined to the fifth speed drive gear 78. A clutch drum 83, as having a plurality of annular clutch plates 82 splined to the inner circumference of its cylindrical portion, is splined to the counter shaft 6.

A piston 84 is so arranged in the clutch drum 83 as to move in the axial direction of the counter shaft 6. When the oil pressure fed to an oil pressure chamber 85 at the back side of the piston 84 from an oil passage formed in the counter shaft 6, the piston 84 is moved rightward of Fig. 1 to provide the engagement between the clutch discs 80 and the clutch plates 82 so that the torque is transmitted by the resultant frictional force.

When the oil pressure chamber 85 is relieved from the oil pressure, the piston 84 is pushed leftward of Fig. 1 by a return spring 87 to disengage the clutch discs 80 and the clutch plates 82. By regulating the oil pressure to be fed to the oil chamber 85, therefore, the engaging force between the clutch discs 80 and the clutch plates 82, that is, the torque capacity of the fifth speed clutch 79 is controlled.

Here will be described a reversing gear pair. Between the clutch hub 42 splined to the counter shaft 6 and the fourth speed driven gear 67, there is interposed a reversing driven gear 88 which is made rotatable relative to the counter shaft 6. This reversing driven gear 88 is given the same external diameter at its portion contacting with the clutch hub 42 as that of the clutch hub 42 and is splined in its outer circumference. As a result, the clutch hub 42 and the reversing driven gear 88 are so connected by the action of the hub sleeve 43 as to transmit the torque.

In the gear unit case 3, on the other hand, there is rotatably disposed a (not-shown) reverse shaft which is arrayed in parallel with the input shaft 5 and the counter shaft 6. On this reverse shaft, for example, there are mounted a (not-shown) gear meshing with the first speed drive gear 38 and a (not-shown) reversing drive gear meshing with the reversing driven gear 88. As a result, a reverse stage can be set by connecting the clutch hub 42 and the reversing driven gear 88 through the hub sleeve 43.

At one end portion of the counter shaft 6, there is formed a drive gear 89 which is in meshing engagement with a ring gear 91 mounted on a differential carrier 90. In this differential carrier 90, there is disposed a pinion shaft 92 which is made rotatable integrally with the differential carrier 90. On the pinion shaft 92, there are rotatably mounted a pair of pinion gears 93. With these paired pinion gears 93, there mesh a pair of side gears 94 which are individually connected to a drive shaft 95. To the end portions of this drive shaft 95, there are fixed wheels such as front wheels (although not shown).

Incidentally, the sizes of the pistons 51, 62, 73 and 84, the clutch discs 47, 58, 69 and 80, and the clutch plates 49, 60, 71 and 82, as used in the aforementioned individual clutches 46, 57, 68 and 79, are set to satisfy following relations so that the engaging forces between the clutch discs 47, 58, 69 and 80 and the clutch plates 49, 60, 71 and 82, that is, the torque capacities at a gear stage setting time may keep predetermined values: $Ap = n \cdot \pi \cdot (Dp^2 - dp^2)/4$. Here: letters Ap indicate the areas for the pistons to receive the oil pressure from the oil pressure chambers; letter n indicates the number of annular frictional faces to be formed by the contacts between the clutch discs and the clutch plates; letters Dp indicate the external diameter of the annular frictional faces; and letters dp indicate the internal diameters of the annular frictional faces.

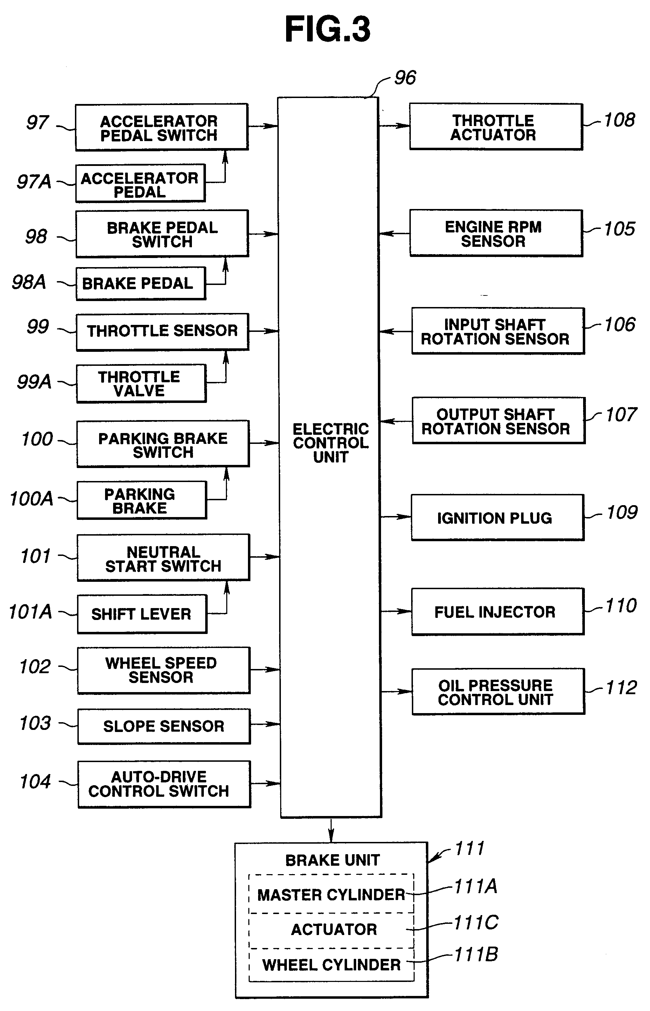

Fig. 3 is a block diagram showing a schematic system construction of a vehicle on which are mounted the automatic transmission 1 of the aforementioned construction and the engine 4. An electronic control unit 96 is constructed of a microcomputer which is composed mainly of a central processing unit (CPU), a memory unit (RAM, ROM) and input/output interface.

To this electronic control unit 96, there are inputted a signal of an accelerator pedal switch 97 for detecting the stroke or speed of depression of an accelerator pedal 97A, a signal of a brake pedal switch 98 for detecting the stroke or speed of depression of a brake pedal 98A, and a signal of a throttle sensor 99 for detecting the degree of opening of a throttle valve 99A disposed in the intake pipe of the engine 4. Further inputted to the electronic control unit 96 are a signal of a parking brake switch 100 for detecting the active state of a parking brake 100A, and a signal of a neutral start switch 101 for detecting the position of a shift lever 101A for controlling the automatic transmission 1.

Further inputted to the electronic control unit 96 are a signal of a wheel speed sensor 102 for detecting each of the RPMs of wheels, i.e., front and rear wheels, a signal of a slope sensor 103 for detecting the slope of the road on which the vehicle is positioned, and a signal of an auto-drive control switch 104 for keeping the vehicle speed constant, i.e., for controlling the setting/release/restoration of the auto-drive. Further inputted to the electronic control unit 96 are a signal of an engine RPM sensor 105 for detecting the RPM of the engine 4, a signal of an input shaft rotation sensor 106 for detecting the RPM of the input shaft 5 of the automatic transmission 1, and a signal of an output shaft rotation sensor 107 for detecting the output shaft, i.e., the counter shaft 6 of the automatic transmission 1.

From the electronic control unit 96, on the other hand, there are outputted a control signal of a throttle actuator 108 for controlling the degree of opening of the throttle valve 99A disposed in the intake pipe of the engine 4, a control signal for controlling the ignition timing of an ignition plug 109 arranged in the electric system of the engine 4, and a control signal for controlling the fuel injection rate of a fuel injector 110 arranged in the fuel system of the engine 4. The throttle valve 99A is constructed such that it is not opened/closed mechanically by the depression of the accelerator pedal 97A but controlled on the basis of the signal inputted to the electronic control unit 96.

Moreover, the electronic control unit 96 is stored in advance with a shift pattern (or shift map) to be used for controlling the automatic transmission 1 in accordance with a variety of running modes. Further stored are data for controlling the ignition timing of the ignition plug 109 or the fuel injection rate of the fuel injector 110 in accordance with the running state of the vehicle. Further stored in the electronic control unit 96 are data such as a reference value of the using frequency of a brake unit 111 for a predetermined running time period, a reference value of a brake assist starting torque by the automatic transmission 1, a skid ratio of the wheels for the reference a traction control, or a skid ratio of the wheels for the reference of an anti-lock brake system control.

On the other hand, the brake unit (or service brake) is given the well-known construction including a master cylinder 111A to be actuated by depressing the brake pedal 98A, a wheel cylinder 111B disposed in each wheel and connected to the master cylinder 111A via an oil passage, and an actuator (e.g., solenoid valve) 111C interposed between the master cylinder 111A and the wheel cylinders 111B. The action of the actuator 111C is controlled by the control signal coming from the electronic control unit 96. If the actuator 111C is made of a solenoid valve, therefore, the oil pressure to be fed thereto can be varied by controlling its ON ratio, i.e., the duty ratio. Incidentally, it is diagnosed by the electronic control unit 9 whether or not the brake unit 111 functions constantly.

Moreover, an oil pressure control unit 112 is provided for controlling the actions of the individual clutches 46, 57, 68 and 79 of the automatic transmission 1 and the actions of the automatic clutch 13. During the run of the vehicle, the running state such as the vehicle speed and the opening of the throttle valve is detected by the electronic control unit 96. On the basis of the set shift pattern and the running state of the vehicle, moreover, a control signal is outputted to the oil pressure control unit 112 to change the gear stages.

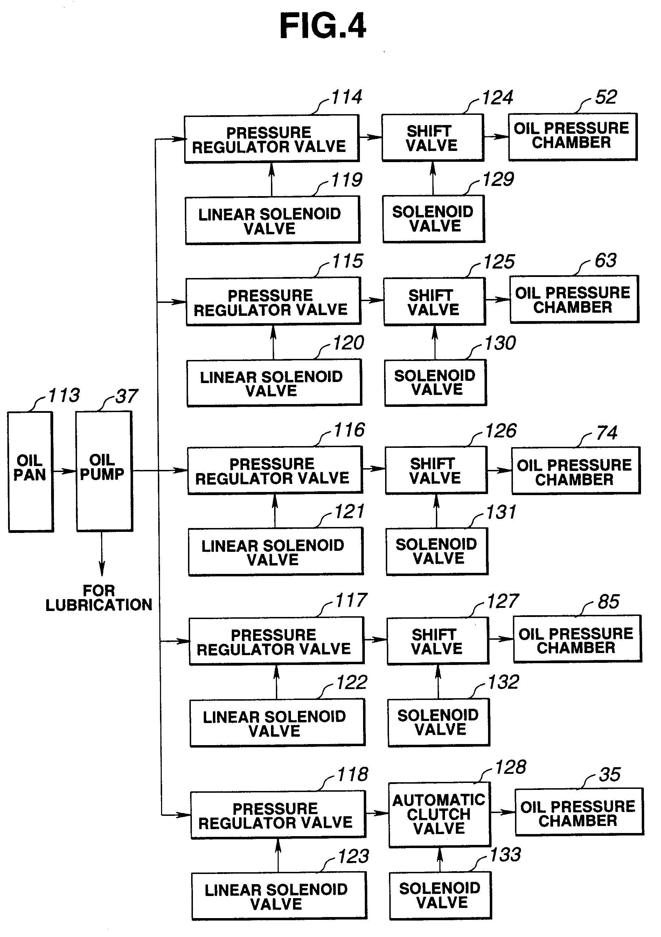

Fig. 4 is a hydraulic circuit diagram showing a schematic construction of the oil pressure control unit 112. The oil (i.e., the so-called "automatic transmission fluid"), as reserved in an oil pan 113 of the automatic transmission 1, is pumped by the oil pump 37 so that its portion is used to lubricate the internal mechanism of the automatic transmission 1. Another portion of the oil is fed to pressure regulator valves 114, 115, 116 and 117, as connected individually to the oil pressure chambers 52, 63, 74 and 85, and a pressure regulator valve 118 connected to the oil pressure chamber 35.

Each of the pressure regulator valves 114, 115, 116, 117 and 118 is given the well-known structure composed of a spool and a spring. To the individual (not-shown) control ports of the pressure regulator valves 114, 115, 116, 117 and 118, there are separately connected linear solenoid valves 119, 120, 121, 122 and 123 having the well-known structure. These linear solenoid valves 119, 120, 121, 122 and 123 are separately turned ON/OFF by the electronic control unit 96. By controlling the ON ratios of the linear solenoid valves 119, 120, 121, 122 and 123, i.e., the duty ratios, moreover, the line pressures to be outputted from the (not-shown) output ports of the pressure regulator valves 114, 115, 116, 117 and 118.

Moreover, the individual output ports of the pressure regulator valves 114, 115, 116 and 117 are separately connected to shift valves 124, 125, 126 and 127. The output port of the pressure regulator valve 118 is connected to an automatic clutch valve 128. To the shift valves 124, 125, 126 and 127 and the automatic clutch valve 128, there are separately connected solenoid valves 129, 130, 131, 132 and 133.

These solenoid valves 129, 130, 131, 132 and 133 are separately controlled by the electronic control unit 96. When the solenoid valves 129, 130, 131, 132 and 133 are turned ON/OFF, the (not-shown) output ports of the shift valves 124, 125, 126 and 127 and the (not shown) output port of the automatic clutch valve 128 are opened/closed. The output ports of the shift valves 124, 125, 126 and 127 are separately connected to the oil pressure chambers 52, 63, 74 and 85. The output of the automatic clutch valve 128 is connected to the oil pressure chamber 35.

The oil pressure control unit 112 thus constructed is controlled during the run of the vehicle by the electronic control unit 96 to change the gear stages. Specifically, if the line pressures are separately fed to or released from the oil pressure chambers 52, 63, 74 and 85, the individual clutches 46, 57, 68 and 74 are applied/released to change and set a predetermined gear stage. At this time of changing and setting the gear stage, the apply pressures, i.e., the torque capacities of the individual clutches 46, 57, 68 and 74 can be separately controlled if the line pressures to be fed to the oil pressure chambers 52, 63, 74 and 85 are separately regulated.

At a transient step of the gear stage changing time, moreover, the opening/closing timings of the individual shift valves are so controlled by the electronic control unit 96 as to prevent the so-called "tie-up state", in which both the torque capacity of the clutch having set the gear stage before change and the torque capacity of the clutch for setting the gear stage after change are higher a predetermined value. If the line pressure to be fed to the automatic clutch valve 128 is regulated during the run of the vehicle, the apply pressure, i.e., the torque capacity of the automatic clutch 13 can be controlled. Incidentally, the hub sleeve 43 for setting the forward first speed or the reverse stage is moved in the axial direction of the counter shaft 6 by a (not-shown) actuator to be controlled by the electronic control unit 96.

Here will be described the specific actions of the automatic transmission 1 thus constructed. In the state with the shift lever 101A being brought to the neutral position, the oil pressure to be fed to the oil pressure chamber 35 of the automatic clutch 13 is released. Then, the central portion of the diaphragm spring 33 is brought by its elastic force into abutment against the side face of the cylinder 19. As a result, the pusher plate 31 in abutment against the pusher plate 31 is moved rightward of Fig. 1 to relieve the clutch facings 29 from its pushing force. In other words, the automatic clutch 13 is released so that the output torque of the engine 4 is blocked by the clutch casing 14 and is not transmitted to the input shaft 5.

In order to set the first forward speed, on the other hand, the individual oil pressure chambers 52, 63, 74 and 85 are relieved from the oil pressures to be fed thereto, thereby to release the second to fifth speed clutches 46, 57, 68 and 79. At the same time, the hub sleeve 43 is moved to the position, as indicated by solid lines, to connect the clutch hub 42 and the inner race 41 of the one-way clutch 40. In this state, the oil pressure is fed to the oil pressure chamber 35 of the automatic clutch 13 to move the piston 34 leftward of Fig. 1, so that the central portion of the diaphragm spring 33 is pushed leftward of Fig. 1.

As a result, the central portion of the diaphragm spring 33 is displaced on its outer circumferential side in the axial direction of the input shaft 5 toward the damper mechanism 27. Then, the pusher plate 31 is pushed toward the pressure receiving plate 30 to establish the engaging state in which the clutch facings 29 are sandwiched between the pusher plate 31 and the pressure receiving plate 30. Then, the output torque of the crankshaft 21 of the engine 4 is transmitted to the input shaft 5 through the clutch casing 14, the clutch discs 25 and the clutch hub 26.

The torque thus transmitted to the input shaft 5 is further transmitted from the first speed drive gear 38 to the first speed driven gear 39 so that the first speed driven gear 39 rotates forward. The one-way clutch 40, as arranged at the inner circumferential side of the first speed driven gear 39, is set to be applied in the direction to transmit the torque from the first speed driven gear 39 to the counter shaft 6, so that it is applied when the input shaft 5 is turned, as described above.

The one-way clutch 40 is connected to the counter shaft 6 through the hub sleeve 43 and the clutch hub 42, as also described above. From the input shaft 5 to the counter shaft 6, therefore, the torque is transmitted through the first speed drive gear 38 and the first speed drive gear 39. The gear ratio at this time is determined to the forward first speed on the basis of the gear ratio between the first speed drive gear 38 and the first speed driven gear 39. The torque thus transmitted to the counter shaft 6 is transmitted to the differential carrier 90 through the drive gear 89 and the ring gear 91. This torque is further transmitted through the pinion gear 93 and the side gear 94 to the drive shaft 95 so that the wheels are driven to run the vehicle.

At this start of the vehicle, the oil pressure to be fed to the oil pressure chamber 35 can be controlled to rise gradually. If the automatic clutch 13 is applied through the so-called "partial clutch state", its torque capacity is gradually raised to increase the drive force of the vehicle gently so that the vehicle can be smoothly started.

On the other hand, the second forward speed is set by applying the second speed clutch 46. When the second speed clutch 46 is applied, the second speed drive gear 44 is connected to the input shaft 5. Then, the torque of the input shaft 5 is transmitted to the counter shaft 6 through the second speed drive gear 44 and the second speed driven gear 45.

The gear ratio between the second speed drive gear 44 and the second speed driven gear 45 is smaller than that between the first speed drive gear 38 and the first speed driven gear 39. As a result, the counter shaft 6 rotates at a higher speed than that of the first speed to set the second forward speed. In this case, therefore, the counter shaft 6 rotates at a higher speed than that of the first speed driven gear 39 so that the one-way clutch 40 comes into the released state. Thus, the speed change from the first to second speeds is achieved by switching only the second speed clutch 46 from the released state to the applied state.

The third to fifth speeds are set, like the aforementioned case of the second speed, by applying the clutches 57, 68 and 79 provided to correspond for the individual gear stages. Specifically, the drive gears and the driven gears of the individual gear stages constantly mesh with each other. However, one gear is made rotatable with respect to the shaft retaining it, and is selectively connected to the same shaft by the clutch. By applying this clutch, therefore, the torque is transmitted by the gear pair corresponding to the clutch so that the gear stage is set by the gear pair.

Here will be described the reverse stage. For this reverse stage, the hub sleeve 43 is moved rightward of Fig. 1 to connect the clutch hub 42 and the reversing driven gear 88, and the automatic clutch 13 is applied in this state. As a result, the torque is transmitted from the input shaft 5 through the (not- shown) reverse shaft to the reversing driven gear 88 so that the counter shaft 6 is rotated backward of the forward stages thereby to set the reverse stage.

During aforementioned action of the automatic transmission 1, a portion of the oil, as pumped by the oil pump 37, is fed to the (not-shown) oil passages formed in the input shaft 5 and the counter shaft 6. This oil is splashed by the centrifugal force, as generated by the rotations of the input shaft 5 and the counter shaft 6, to cool/lubricate the gear speed change mechanism and the frictional engagement elements.

On the other hand, the vehicle having the automatic transmission 1 thus far described may be provided with an auto-drive function, an anti-lock brake system function or a traction control function. First of all, the auto-drive function is the well-known one to keep the vehicle speed constant once the driver sets the speed, by adjusting the opening of the throttle valve automatically by the throttle actuator 108 even if the driver does not depresses the accelerator pedal.

Specifically, the vehicle speed is set, released and restored by the action of the auto-drive control switch 104. If, on the other hand, at least one of the following detections is made during the run at a constant speed, the control of the throttle actuator 108 by the electronic control unit 96 is released: the detection of the depression of the accelerator pedal 97A by the accelerator pedal switch 97; the detection of the depression of the brake pedal 98A by the brake pedal switch 98; the detection of the operation of the parking brake 100A by the parking brake switch 100; and the detection of the control of the shift lever 101A to the neutral range or the parking range by the neutral start switch 101.

On the other hand, the anti-lock brake system function is the well-known one to prevent the wheels from skidding even if the brake unit 111 is abruptly activated while the vehicle is running a road such as a snow-covered road having a surface of small coefficient of friction. Specifically, if the brake pedal 98A is abruptly depressed during the run of the vehicle, the drive force of the wheels is abruptly suppressed. At this time, the RPMs of the individual wheels are detected by the wheel speed sensors 102 so that the oil pressures to be fed to the wheel cylinders 111C of the brake unit 111 are set to the levels matching the various road surface situations and are controlled by the actuator 111B of the brake unit 111. As a result, the wheels can be prevented from skidding, to retain the vehicle stability and drivability thereby to keep the driving performance.

Moreover, the traction control function is the well-known one to control the drive force of the vehicle in accordance with the running state of the vehicle. This function is exemplified by suppressing the drive force so as to prevent the drive wheels from skidding. Specifically, when the accelerator pedal 97A is depressed to accelerate the vehicle on a road having a low coefficient of friction such as a snow-covered road or a frozen road, the drive wheels may skid. From the difference in the RPM between the driven wheels and the drive wheels, therefore, the skidding state of the drive wheels is determined to suppress the drive force of the vehicle in accordance with the skidding state.

The content of the control of the drive force for the traction control can be exemplified by controlling the ignition plug 109 to delay the ignition timing, by controlling the fuel injector 110 to reduce the fuel injection rate, or by controlling the throttle actuator 108 to adjust the opening of the throttle valve 99A.

In order to achieve the anti-lock brake system function or the traction control function, as described above, the oil pressure to be fed to the wheel cylinders of the brake unit 111, the ignition timing of the ignition plug 109, the fuel injection rate of the fuel injector 110, or the opening of the throttle valve 99A is set on the basis of the skid ratios, as calculated from the vehicle speed and the wheel speeds. These skid ratios can be calculated by the well-known method, as disclosed in JP-A-63-78869, JP-A-5-97025 or JP-A-6-8816, for example.

Since the present invention is constructed, as described above, while the vehicle is running by setting a predetermined gear stage in the automatic transmission 1, the drive force of the vehicle is controlled in the following manner if a brake demand is detected by the electronic control unit 96 with the second speed clutch 46 being applied to set the second forward speed gear stage.

First of all, while the second speed gear stage is being set, a predetermined line pressure is fed to the oil pressure chamber 52 by the action of the shift valve 124. If the aforementioned brake demand is detected, the shift valve 125 is actuated to feed the line pressure to the oil pressure chamber 63. This line pressure is regulated to a lower level than that being fed to the oil pressure fed to the oil pressure chamber 52.

As a result, the engaging pressure, i.e., the torque capacity of the clutch discs 58 and the clutch plates 60 of the third speed clutch 57 is lower than that at the time of setting the gear stage so that the clutch discs 58 and the clutch plates 60 come into the slipping state. Then, the torque of the input shaft 5 is circulated through the second speed drive gear 44, the second speed driven gear 45, the counter shaft 6, the third speed driven gear 56 and the third speed drive gear 55 to generate the braking force thereby to suppress the drive force of the vehicle.

Incidentally, a torque attenuation similar to the aforementioned one can be activated to suppress the drive force of the vehicle by the control to slip the second speed clutch 46 in the state of setting the third speed, the control to slip the fifth speed clutch 79 in the state of setting the fourth speed, or the control to slip the fourth speed clutch 68 in the state of setting the fifth speed.

At the time of a slip control of clutches other than those setting the gear stage of the automatic transmission 1, as described above, the slip control of the automatic clutch 13 can be made in parallel with the former slip control. In the latter slip control of the automatic clutch 13, the engaging pressure, i.e., the torque capacity between the clutch facings 29, and the pressure receiving plate 30 and the pusher plate 31 can be adjusted if the line pressure to be fed from the oil pump 20 to the oil pressure chamber 35 of the automatic clutch 13 is set to a lower level than that of the line pressure in the ordinary torque transmission state.

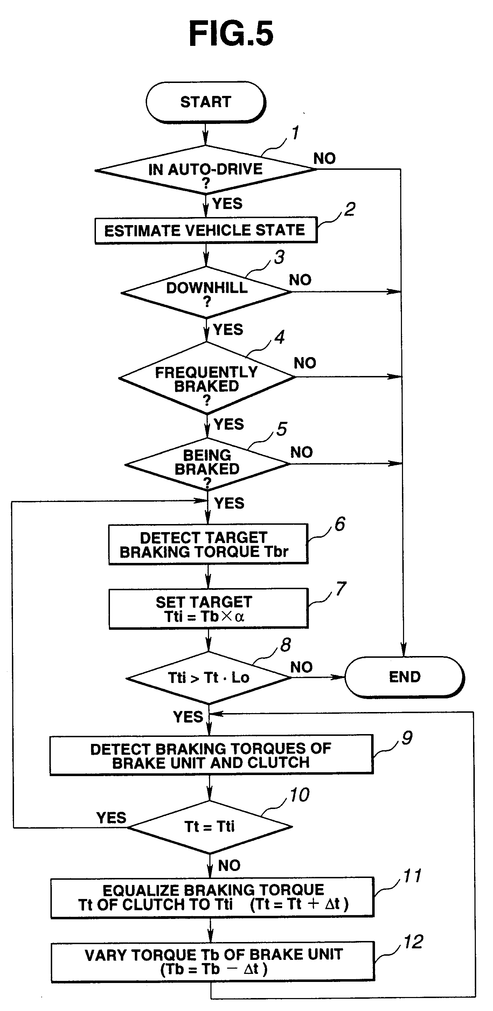

Here will be specifically described a control example of the automatic transmission of the present invention. Fig. 5 is a flow chart showing one example of the control routine corresponding to the present invention. First of all, during the run of the vehicle, it is decided (at Step 1) by the electronic control unit 96 whether or not the auto-drive control is being made. The control routine is ended if the answer of Step 1 is NO, but the vehicle state is estimated (at Step 2) by the electronic control unit 96 if YES. This estimation is made on the basis of the signal coming from the throttle sensor 99 or the output shaft rotation sensor 107. It is then decided (at Step 3) on the basis of the slope sensor 103 whether or not the vehicle is running downhill. If the answer of Step 3 is NO, the control routine is ended.

If the answer of Step 3 is YES, it is decided (at Step 4) on the basis of the signal coming from the brake pedal switch 98 whether or not the frequency of using the brake unit 111 is higher than a reference value (e.g., the number of depressions of the brake pedal for a predetermined time period). At Step 4, it would be possible to decide whether or not the stroke of the depression of the brake pedal is larger than a reference value. If the answer of Step 4 is NO, the control routine is ended. If the answer of Step 4 is YES, on the other hand, it is decided (at Step 5) whether or not the brake pedal 98A is being depressed.

The control routine is ended if the answer of Step 5 is NO, but a target braking torque Tbr of the entire vehicle is set (at Step 6) for suppressing the drive force of the vehicle. This target braking torque Tbr is set with reference to the vehicle speed, as set by the auto-drive control switch 104.

On the basis of the target braking torque Tbr, the ratio, i.e., the distribution ratio $\alpha$ between the braking torque Tti to be borne by the automatic transmission 1 and the braking torque Tb to be borne by the brake unit 111 is set (at Step 7). The distribution ratio $\alpha$ can be set within such a safe range on the basis of the RPM of the engine 4 or the output shaft RPM of the automatic transmission 1 as can prevent the fading phenomenon of the brake unit 111.

Moreover, the braking torque Tb of the automatic transmission 1 is calculated by $Tb = (\rho 1 - \rho 2) \cdot Tt$. Here, characters $\rho 1$ and $\rho 2$ designate reduction gear ratios, and letters Tt designate the braking torque of the clutch to be slip-controlled. This braking torque Tt is calculated from $Tt = 1/3 \cdot \mu \cdot Pc \cdot Ap \cdot n \cdot (D^3 - d^3)/(D^2 - d^2)$. Here: letter $\mu$ designates the friction coefficient of the frictional surface of the clutch to be slip-controlled; letters Pc designate the line pressure to be applied to the piston 62 of the third speed clutch 57; and letters Ap designate the pressure receiving area of the piston 62. Moreover: letter n designates the number of the annular friction faces to be formed by the contracts between the clutch discs and the clutch plates on the clutch to be slip- controlled; letter D designates the external diameter of the annular frictional faces; and letter d designates the internal diameter of the annular frictional faces.

It is then decided (at Step 8) by the electronic control unit 96 whether or not the set braking torque Tti exceeds the brake assist starting torque TtELo, as stored in the electronic control unit 96. If the answer of Step 8 is NO, the target braking torque Tbr can be achieved by the single braking torque by the brake unit 111 so that the control routine is ended. If the answer of Step 8 is YES, on the other hand, the clutches other than those setting the gear stage of the automatic transmission 1 are slip-controlled. At the same time, there are detected both the braking torque of the brake unit 111 in use and the braking torque by the slip control of the automatic transmission 1. Incidentally, the slip control of the automatic clutch 13 could be made in parallel with the slip control of the clutches other than those setting the gear stage of the automatic transmission 1. It is then decided (at Step 10) whether or not the braking torque Tt, as detected, of the automatic transmission 1 and the target braking torque Tti are equal. If the answer of Step 10 is YES, the routine returns to Step 6.

If the answer of Step 10 is NO, on the other hand, the control is made (at Step 11) to equalize the braking torque Tt of the clutch in the slip control and the target braking torque Tti, that is, to control the line pressure to be fed to the oil pressure chamber. Next, a control is made (at Step 12) to vary the brake torque Tb of the brake unit 111. The aforementioned Steps 9, 10 and 11 correspond to torque control means of the present invention; Steps 3, 4 and 5 correspond to brake demand detecting means of the present invention; and Step 7 corresponds to ratio setting means of the present invention.

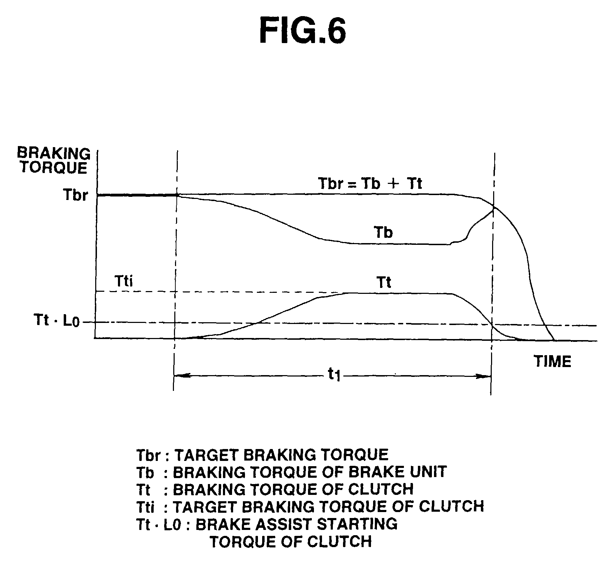

Fig. 6 is a time chart illustrating relations among the target brake torque Tbr, the brake torque Tb of the brake unit 111 and the brake torque Tt by the slip control of the clutch of the automatic transmission 1 in the control routine of Fig. 5. For the time period t1 in which the clutches other than those setting the gear stage are in the slip control, the braking torque Tb to be borne by the brake unit 111 is reduced by an extent of the braking torque Tb of the clutch of the automatic transmission 1 in accordance with the target braking torque Tbr.

Thus, according to the control routine of Fig. 5, the drive force of the vehicle can be suppressed by slip-controlling the existing components of the automatic transmission 1, that is, the clutches other than those setting the gear stage in accordance with the demanded braking force. As a result, it is possible to lighten the load of the brake unit 111 for stopping the rotations of the wheels and to retain the run/stop of the vehicle even if the brake unit 111 fails. Moreover, the drive force of the vehicle can be suppressed without using any special component so that the numbers of parts and manufacturing steps can be kept as they are to keep the cost for the manufacture and so that the mileage can be satisfactorily kept without increasing the weight of the vehicle.

If the slip control of the clutches other than those setting the gear stage of the automatic transmission 1 and the slip control of the automatic clutch 13 are carried out in parallel, the control of the drive force of the vehicle can be more facilitated because the torque attenuating function can be made at two stages. Specifically, it may occur that the demanded braking force cannot be achieved only by the slip control of the clutches other than those setting the gear stage of the automatic transmission 1. If, in this case, the torque to be transmitted from the engine 4 to the automatic transmission 1 is lowered by the slip control of the automatic clutch 13, the drive force of the vehicle can be effectively suppressed to improve the compatibility with the road situations and accordingly the drivability. On the other hand, the apply pressure of the clutch to be slip-controlled is controlled by the oil pressure control unit 112. As a result, the output torque of the automatic transmission 1 can be controlled highly accurately.

On the basis of the demanded braking force of the vehicle, moreover, the distribution ratio between the braking torque to be borne by the clutches of the automatic transmission 1 and the braking torque Tb to be borne by the brake unit 111 is set. As a result, the braking force to be borne by the brake unit 111 can be set according to the safety factor thereby to improve the durability. The distribution ratio $\alpha$ can also be set on the basis of the stroke of depression or number of depressions of the brake pedal 98A. In this case, the braking force, as fitting the intention of the driver, can be achieved to improve the drivability. It is further possible to set the distribution ratio $\alpha$ which can suppress the fading phenomenon of the brake unit 111. In this case, the heat generation of the brake unit 111 can be suppressed to prevent the fading phenomenon. In the aforementioned control routine, the clutch to be slip-controlled is cooled/lubricated with the oil fed from the oil pump 37 so that it can be suppressed from generating the frictional heat and prevented from wearing thereby to keep the durability.

In addition, the control routine is executed during the control of the auto-drive so that the running function at a constant speed on a downhill is further improved. This auto-drive control can also be achieved exclusively through the slip of the clutch. Incidentally, the control routine at and after Step 2 of Fig. 5 can also be applied to the state in which no control of the auto-drive is made.

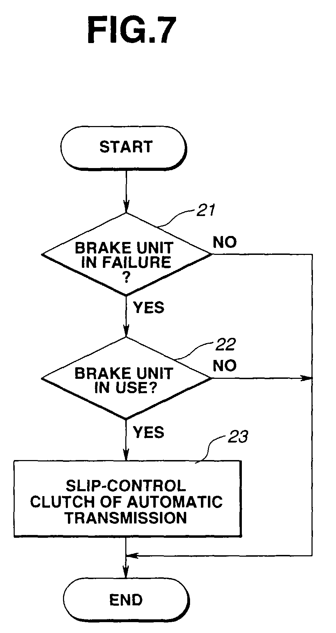

Fig. 7 is a flow chart showing another example of the control routine of the present invention. First of all, it is decided (at Step 21) by the electronic control unit 96 whether or not the brake unit 111 is in failure. If the answer of Step 21 is YES, it is decided (at Step 22) whether or not the brake pedal 98A is depressed.

If the answer of Step 22 is YES, the brake unit 111 will not function constantly. Therefore, the clutches other than those setting the gear stage of the automatic transmission 1 are slip-controlled (at Step 23) to lower the drive force of the vehicle with the braking force, as effected by the slip. In this case, the automatic clutch 13 may naturally be slip- controlled. Incidentally, the control routine is ended if the answer of Step 21 or Step 22 is NO.

The control routine of Fig. 7 can be applied to the situation in or out of the control of the auto-drive. Step 23 corresponds to the torque control means of the present invention. This control routine can also achieve effects similar to those of the control routine of Fig. 5.

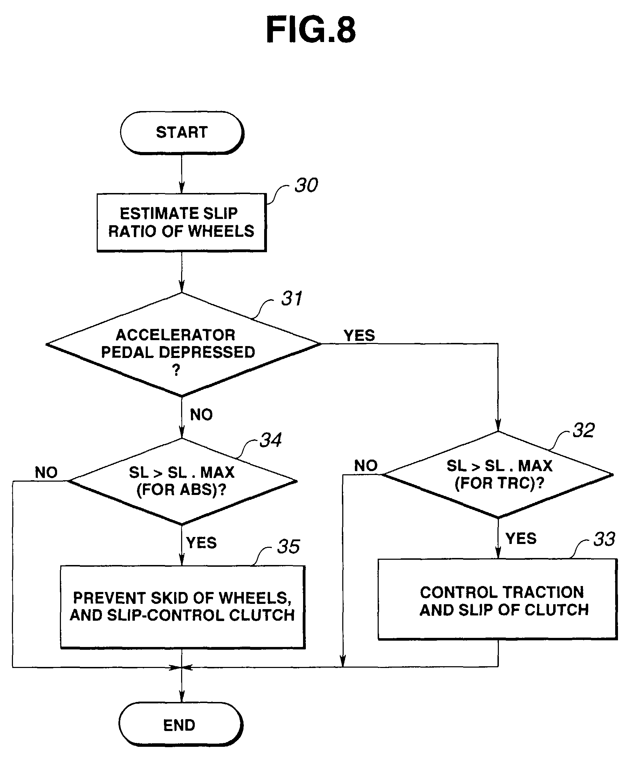

Fig. 8 is a flow chart showing another example of the control routine of the present invention. First of all, the vehicle speed and the wheel speed are detected by the electronic control unit 96 so that a skid ratio SL of the wheels is estimated (at Step 30) on the basis of the vehicle speed and the wheel speed. It is then decided (at Step 31) from the signal of the accelerator pedal switch 98 whether or not the accelerator pedal 98A is depressed. If the answer of Step 31 is YES, it is decided (at Step 32) by the electronic control unit 96 whether or not the skid ratio, as estimated at Step 30, exceeds a skid ratio SLEMax for providing a control reference for the traction control.

If the answer of Step 32 is YES, the aforementioned traction control is made (at Step 33) to control at least one of the fuel injection rate of the engine 4, the ignition timing and the opening of the throttle valve 99A. At the same time, the slip control of the clutch of the automatic transmission 1, as described with reference to Fig. 5, is added (at Step 33) to suppress the drive force of the vehicle, until the control routine is ended. The traction control could be achieved exclusively by the slip control of the clutch. If the answer of Step 32 is NO, the control routine is ended without any traction control.

If the answer of Step 31 is NO, on the other hand, it is decided (at Step 34) the detected skid ratio SL is over the control reference value SLEMax of the anti-lock brake system. If the answer of Step 34 is YES, the oil pressures to be fed to the wheel cylinders 111B of the brake unit 111 are controlled to prevent the skid of the wheels and to slip-control of the clutches of the automatic transmission 1 (at Step 35). If the answer of Step 34 is NO, the control routine is ended without any anti-lock brake system control.

Steps 33 and 35 correspond to the torque control means of the present invention. In the control routine of Fig. 8, too, there can be achieved effects similar to those of the control routine of Fig. 5. According to the control routine of Fig. 8, moreover, the slip control of the automatic transmission 1 is added to the traction control or the anti-lock brake system control so that the traction control function or the anti-lock brake system function can be made more effective.

Incidentally, the aforementioned individual control routines can be executed separately or in combination. Moreover, the present invention can also be applied to an automatic transmission employing a planetary gear mechanism as its gear speed change mechanism.

## Claims

1. A control system for an automatic transmission (1) which has a gear speed change mechanism (38, 39, 44, 45, 55, 56, 66, 67, 77, 78) of constant mesh type for transmitting the output torque of a prime mover (4); and a plurality of frictional engagement elements (46, 57, 68, 79) adapted to be separately applied/released to switch the torque transmission passages of said gear speed change mechanism (38, 39, 44, 45, 55, 56, 66, 67, 77, 78) thereby to set a gear stage, characterized by:

   torque control means (96) for controlling the output torque of said automatic transmission (1) by slipping the frictional engagement elements (46, 57, 68, 79) other than the frictional engagement elements (46, 57, 68, 69) setting said gear stage, while the vehicle is running in the set state of said gear stage.

2. A control system for an automatic transmission (1) according to Claim 1, further characterized by:

   an inputting automatic clutch (13) arranged in the torque transmission passage between said prime mover (4) and said gear speed change mechanism (38, 39, 44, 45, 55, 56, 66, 67, 77, 78),
      wherein said torque control means (96) includes means (96) for making the slip control of said automatic clutch (13).

3. A control system for an automatic transmission (1) according to Claim 1,
      wherein said torque control means (96) includes an oil pressure control unit (112) for controlling the oil pressures to act upon said frictional engagement elements (46, 57, 68, 79).

4. A control system for an automatic transmission (1) according to Claim 1, further characterized by:

   demanded braking force detecting means (96) for detecting a demanded braking force of the vehicle; and
   ratio setting means for setting a ratio between a braking torque to be borne by the frictional engagement elements (46, 57, 68, 79) to be slip-controlled and a braking torque to be borne by a brake unit (111) mounted on the vehicle, on the basis of the demanded braking force which is detected by said demanded braking force detecting means (96).

5. A control system for an automatic transmission (1) according to Claim 4,
   wherein said demanded braking force detecting means (96) includes means (96) for detecting the demanded braking force on the basis at least one of the stroke of the depression of a brake pedal (98A) for controlling the action of said brake unit (111) and the number of depressions of said brake pedal (98A).

6. A control system for an automatic transmission (1) according to Claim 4,
   wherein said ratio setting means (96) includes means (96) for setting said ratio to a value at which the fading phenomenon of said brake unit (111) is suppressed.

7. A control system for an automatic transmission (1) according to Claim 1, further characterized by:

   auto-drive control means (96) for keeping the vehicle speed constant,
   wherein said torque control means (96) includes means (96) for generating at least a portion of the braking force at the time of keeping the vehicle speed constant by said auto-drive control means (96), through the slip control of said frictional engagement elements (46, 57, 68 and 79).

8. A control system for an automatic transmission (1) according to Claim 1, further characterized by:

   anti-lock brake system control means (96) for preventing the wheels from skidding by controlling the braking force of said brake unit (111),
   wherein said torque control means (96) includes means (96) for executing the slip control of said frictional engagement elements (46, 57, 68, 79) in accordance with the control content of the braking force by said anti-lock brake system control means (96).

9. A control system for an automatic transmission (1) according to Claim 1, further characterized by:

   traction control means (96) for controlling the driving force for each wheel,
   wherein said torque control means (96) includes means (96) for executing the slip control of said frictional engagement elements (46, 57, 68, 79) in accordance with the control content of the braking force for each wheel by said traction control means (96).

# FIG.1

EP 0 810 115 A2

# FIG.2

EP 0 810 115 A2

# FIG.3

97 — **ACCELERATOR PEDAL SWITCH**

97A — **ACCELERATOR PEDAL**

98 — **BRAKE PEDAL SWITCH**

98A — **BRAKE PEDAL**

99 — **THROTTLE SENSOR**

99A — **THROTTLE VALVE**

100 — **PARKING BRAKE SWITCH**

100A — **PARKING BRAKE**

101 — **NEUTRAL START SWITCH**

101A — **SHIFT LEVER**

102 — **WHEEL SPEED SENSOR**

103 — **SLOPE SENSOR**

104 — **AUTO-DRIVE CONTROL SWITCH**

96

**ELECTRIC CONTROL UNIT**

**THROTTLE ACTUATOR** — 108

**ENGINE RPM SENSOR** — 105

**INPUT SHAFT ROTATION SENSOR** — 106

**OUTPUT SHAFT ROTATION SENSOR** — 107

**IGNITION PLUG** — 109

**FUEL INJECTOR** — 110

**OIL PRESSURE CONTROL UNIT** — 112

**BRAKE UNIT** — 111

**MASTER CYLINDER** — 111A

**ACTUATOR** — 111C

**WHEEL CYLINDER** — 111B

15

# FIG.4

```
113        37
┌──────┐ ┌──────┐
│ OIL  │ │ OIL  │
│ PAN  │→│ PUMP │
└──────┘ └──────┘
              │
              ↓
            FOR
        LUBRICATION
```

| | | |
|---|---|---|
| PRESSURE REGULATOR VALVE (114) | SHIFT VALVE (124) | OIL PRESSURE CHAMBER (52) |
| LINEAR SOLENOID VALVE (119) | SOLENOID VALVE (129) | |
| PRESSURE REGULATOR VALVE (115) | SHIFT VALVE (125) | OIL PRESSURE CHAMBER (63) |
| LINEAR SOLENOID VALVE (120) | SOLENOID VALVE (130) | |
| PRESSURE REGULATOR VALVE (116) | SHIFT VALVE (126) | OIL PRESSURE CHAMBER (74) |
| LINEAR SOLENOID VALVE (121) | SOLENOID VALVE (131) | |
| PRESSURE REGULATOR VALVE (117) | SHIFT VALVE (127) | OIL PRESSURE CHAMBER (85) |
| LINEAR SOLENOID VALVE (122) | SOLENOID VALVE (132) | |
| PRESSURE REGULATOR VALVE (118) | AUTOMATIC CLUTCH VALVE (128) | OIL PRESSURE CHAMBER (35) |
| LINEAR SOLENOID VALVE (123) | SOLENOID VALVE (133) | |

# FIG.5

START

1

IN AUTO-DRIVE
? — NO →

↓ YES

2

ESTIMATE VEHICLE STATE

3

DOWNHILL
? — NO →

↓ YES

4

FREQUENTLY
BRAKED
? — NO →

↓ YES

5

BEING
BRAKED
? — NO →

↓ YES

6

DETECT TARGET
BRAKING TORQUE Tbr

7

SET TARGET
Tti = Tb × α

8

$Tti > Tt \cdot Lo$ — NO → END

↓ YES

9

DETECT BRAKING TORQUES OF
BRAKE UNIT AND CLUTCH

10

YES ← $Tt = Tti$

↓ NO

11

EQUALIZE BRAKING TORQUE
Tt OF CLUTCH TO Tti    (Tt = Tt + Δt )

12

VARY TORQUE Tb OF BRAKE UNIT
(Tb = Tb − Δt )

# FIG.6

Tbr : TARGET BRAKING TORQUE
Tb : BRAKING TORQUE OF BRAKE UNIT
Tt : BRAKING TORQUE OF CLUTCH
Tti : TARGET BRAKING TORQUE OF CLUTCH
Tt · L0 : BRAKE ASSIST STARTING
          TORQUE OF CLUTCH

# FIG.7

START

21

BRAKE UNIT
IN FAILURE
?

NO

YES

22

BRAKE UNIT
IN USE?

NO

YES

23

SLIP-CONTROL
CLUTCH OF AUTOMATIC
TRANSMISSION

END

# FIG.8

START

ESTIMATE SLIP
RATIO OF WHEELS — 30

ACCELERATOR
PEDAL DEPRESSED
? — 31

YES

NO

SL > SL . MAX
(FOR ABS)? — 34

NO

SL > SL . MAX
(FOR TRC)? — 32

NO

YES — 35

PREVENT SKID OF WHEELS,
AND SLIP-CONTROL CLUTCH

YES — 33

CONTROL TRACTION
AND SLIP OF CLUTCH

END